# EUROPÄISCHE PATENTSCHRIFT

(11) **EP 2 227 788 B1**
(45) Veröffentlichungstag und Bekanntmachung des Hinweises auf die Patenterteilung: **18.05.2011**
(21) Anmeldenummer: 08842924.6
(22) Anmeldetag: 24.10.2008
(51) Int. Cl.: G07D 7/00, G07D 7/12, G02B 25/00

(54) **SICHERHEITSSYSTEM MIT EINEM INTEGRIERTEN MIKROOPTISCHEN VERGRÖSSERUNGSSYSTEM**
SECURITY SYSTEM COMPRISING AN INTEGRATED MICRO-OPTICAL MAGNIFICATION SYSTEM
SYSTÈME DE SÉCURITÉ AVEC UN SYSTÈME MICRO-OPTIQUE DE GROSSISSEMENT INTÉGRÉ

(30) Priorität: 27.10.2007 DE 102007052009
(43) Veröffentlichungstag der Anmeldung: 15.09.2010
(73) Patentinhaber: Stiftung Alfred-Wegener-Institut Für Polar- Und Meeresforschung, 27570 Bremerhaven (DE); Hochschule Bremerhaven, 27568 Bremerhaven (DE)
(72) Erfinder: DUBISCHAR-HAMM, Christian, 27580 Bremerhaven (DE); ZIELINSKI, Oliver, 26122 Oldenburg (DE)
(86) Internationale Anmeldenummer: PCT/DE2008/001764
(87) Internationale Veröffentlichungsnummer: WO 2009/052811

(56) Entgegenhaltungen:
- WO-A-2006/087138
- DE-A1- 10 238 506
- DE-A1-102005 045 642
- US-A1- 2004 245 765

## Beschreibung

Die Erfindung bezieht sich auf ein Sicherheitssystem, basierend auf der optischen Identifikation von hochspezifischen, räumlich erscheinenden Mikrostrukturen, wobei das Sicherheitssystem ein Substrat umfasst, in das mindestens eine räumlich ausgebildete Mikrostruktur sowie ein mikrooptisches Vergrößerungssystem integriert sind.

Wertvolle, hochpreisige oder hoch besteuerte Produkte wie z.B. Banknoten, Aktien, Ausweise aller Art und Urkunden, aber auch so genannte "Labelprodukte" wie Kosmetik, Tonträger, Bekleidung, Schuhe, Handtaschen, Uhren sowie Alkohol oder Tabak werden häufig gefälscht bzw. geschmuggelt. Nach Angaben der EU beträgt der Handel mit nachgemachten Waren, illegaler Überproduktion sowie Parallel- und Re-Importen mittlerweile bereits 10% des Welthandels, was einem internationalen Schaden von mittlerweile 500 Milliarden Euro gleichkommt. Die betroffenen Unternehmen müssen neben Umsatzverlusten zusätzlich Imageschädigungen und ggfs. sogar Produkthaftungsprozesse für gefälschte Produkte in Kauf nehmen. Ziel einer Produktsicherung gegen Nachahmung, Schmuggel und Diebstahl ist es, durch geeignete individuelle, hochgradig komplexe und einzigartige Merkmale am

Produkt zu gewährleisten, dass dieses als Original eindeutig erkennbar bzw. identifizierbar ist. Hierzu wird unterschieden zwischen öffentlich sichtbaren Merkmalen (z.B. Hologramme) und nicht öffentlichen Merkmalen, die entweder mit einem öffentlich erhältlichen speziellen Lesegerät (z.B. UV-Leuchten zum Nachweis von Sicherheitsfasern in Banknoten) oder nur mit schwer verfügbaren Geräten (wie beispielsweise Elektronenmikroskopen) sichtbar werden. Technisch gelöst wird der Produktschutz in der Regel durch Kennzeichnung mit einer originalen Information, die hochgradig individuell und damit nicht nachahmbar ist. Eine Reihe von unterschiedlichen technischen Lösungen zum Produktschutz ist aus dem Stand der Technik bekannt. Die vorliegende Erfindung beschäftigt sich mit dem Produktschutz durch Vorsehen eines öffentlich sichtbaren Merkmals am Produkt, dessen Aussehen direkt überprüft und nicht oder nur extrem schwer nachgeahmt werden kann.

### STAND DER TECHNIK

Aus der WO 2006/125224 A2 ist ein Sicherheitssystem bekannt, bei dem über einer Vielzahl von mikrostrukturierten Einzelbildern ein mikrooptisches Vergrößerungssystem aus einer Vielzahl von Zylinderlinsen und damit mit einer Vielzahl von parallelen optischen Achsen angeordnet ist. Über das mikrooptische Vergrößerungssystem werden die Einzelbilder zu einem gemeinsamen flächigen Muster kombiniert. Ein ähnliches Verfahren zeigt die WO 20061016265 A1**,** bei dem anstelle von Bildern diffraktive Strukturen nullter oder erster Ordnung eingesetzt und durch das mikrooptische Vergrößerungssystem aus benachbarten Zylinderlinsen entsprechend modifizierte optische Charakteristika der diffraktiven Mikrostruktur erkannt werden können. Auch hier entsteht aber nur ein flächiger Eindruck. Derartige optische Vergrößerungssysteme mit einer Vielzahl von parallelen optischen Achsen sind in der Herstellung jedoch relativ aufwändig.

In der US 7.006.294 B2 wird ein Sicherheitssystem beschrieben, das auf der optischen Identifikation von hochspezifischen, räumlich erscheinenden Mikrostrukturen in einem Substrat basiert. Dafür ist für jedes Betrachterauge ein spezielles Muster vorgesehen. Über ein in das Substrat integriertes mikrooptisches Vergrößerungssystem aus parallelen Zylinderlinsen mit parallelen optischen Achsen, von denen immer eine Zylinderlinse je einem Muster für das linke und das rechte Auge zugeordnet ist, werden die Muster dann selektiv den Betrachteraugen zugeführt, sodass beim Betrachter der Eindruck eines dreidimensional ausgeprägten Musters entsteht (Prinzip der Autostereoskopie). Zur Erzeugung der hochspezifischen Mikrostruktur wird bei dem bekannten Sicherheitssystem also ein relativ aufwändiges und damit teures mikrooptisches Vergrößerungssystem benötigt, mit dessen Hilfe jedoch nur eine virtuelle Räumlichkeit von bildlichen Strukturen erzeugt wird, sodass eine Nachahmung durch Mikrodruckverfahren nicht zuverlässig ausgeschlossen werden kann. Aus der US 5.712.731 A ist ein ähnliches Sicherheitssystem bekannt, bei dem zur Erzeugung von Mikrostrukturen mit räumlichem Erscheinungsbild ein mikrooptisches Vergrößerungssystem mit einer Matrix aus sphärischen Mikrolinsen oberhalb von zugeordneten Mikrobildem verwendet wird. Die Mikrobilder werden entweder von Oberflächenreliefen oder Druckbildern gebildet Zur Erzeugung von Parallaxe sind mehrere Sätze von Druckbildern vorgesehen, die jeweils unterschiedliche Ansichten desselben Bildes definieren. Beide Druckschriften lehren aber ausschließlich die Erzeugung von virtuellen räumlichen Erscheinungsbildern von Mikrostrukturen und nutzen dafür vielachsige optische Vergrößerungssysteme. Dennoch sind sie für die vorliegende Erfindung bezüglich eines Sicherheitssystems, das auf der optischen Identifikation von hochspezifischen, räumlich erscheinenden Mikrostrukturen in einem Substrat mittels eines in das Substrat integrierten mikrooptischen Vergrößerungssystems beruht, gattungsbildend, sodass die Erfindung von diesen Druckschriften als nächstliegendem Stand der Technik ausgeht.

Weiterhin ist aus der US 200410144845 A1 ein Sicherheitssystem bekannt, bei dem eine auf dem Substrat befindliche Mikrostruktur unter einer externen Optik mit einer zentralen Linse und damit mit einer einzigen optischen Achse geprüft wird. Die Optik ist allerdings unabhängig vom Substrat und damit nicht grundsätzlich zusammen mit dem Substrat verfügbar. Außerdem hat sie einen größeren Platzbedarf. Aus der DE 195 09 908 A1 ist es bekannt, auf einer Kreditkarte nicht öffentliche, optische Sicherheitsmerkmale in Form fluoreszierender Partikel vorzusehen. Eine mit einer autarken Energiequelle (insbesondere Solarzellen) versehene Kreditkarte ist aus der DE 297 11 321 U1 bekannt. Eine Lichtquelle in den Abmessungen einer Kreditkarte zeigt die DE 93 20 659 U1. Eine in eine Kreditkarte integrierte Lupe offenbart die DE 92 00 552 U1**.**

Aus der DE 10 2005 045 642 A1 und der DE 102 38 506 A1 sind Verfahren zur Sicherung und visuellen Kennzeichnung von Produkten unter Verwendung von anorganischen Mikropartikeln bekannt, bei denen die Einzigartigkeit von natürlichen, biomineralisierten Schalenstrukturen von biologischen Organismen in einer technischen Aufbereitung ausgenutzt wird. Der Originalitätsnachweis basiert direkt auf dem einzigartigen optischen Erscheinungsbild der verwendeten anorganischen Mikropartikel. Aus der EP 1 003 146 B1 und der US 6.647.649 B2 sind ebenfalls Verfahren zur Sicherung und visuellen Kennzeichnung von Produkten, jedoch unter Verwendung von künstlich erzeugten Mikropartikeln, bekannt. Dabei werden Mikropartikel mit jeweils mehreren, einen Code bildenden Schichten aus einem farbigen Kunststoff eingesetzt, wobei für jedes einzelne Produkt zwei oder mehr verschieden kodierte Mikropartikel-Gruppen vorgesehen sind. In der Farbkodierung, die in dieser Art aus der visuellen Kennzeichnung von Widerständen bekannt ist, können verschiedene Informationen, wie Produkttyp, Hersteller des Produkts oder Seriennummer kodiert werden (jede mit einer Grundfarbschicht gekennzeichnete Mikropartikel-Gruppe steht beispielsweise für zwei Stellen einer Dezimalzahl). In der US 2004/0067360 A1 werden ebenfalls künstlich erzeugte Mikropartikel offenbart, die in ihrem dreidimensionalen Erscheinungsbild aufwändig konstruiert sind und zum Nachahmungsschutz eine Reihe verschiedener physikalischer Parameter nutzen.

Aus der WO 20061087138A ist ein Sicherheitssystem bekannt, das im Wesentlichen ein Echtheitsmerkmal aus einer Anordnung von mehreren fokussierenden Elementen und einer weiteren Anordnung von mehreren mikroskopischen Strukturen aufweist, die so übereinander angeordnet sind, dass die mikroskopischen Strukturen durch die fokussierenden Elemente vergrößert erscheinen.

Die US 200410245765 A offenbart ein Sicherheitssystem mit einem Substrat (2), in das in einem ersten Bereich ein Vergrößerungssystem (Fresnel-Linse 11) mit einer einzigen optischen Achse und in einem zweiten Bereich eine zweidimensionale Mikrostruktur (Mikrodruck 10) integriert sind. Das Substrat kann zur Verifizierung so gefaltet werden, dass die Mikrostruktur auf der optischen Achse des Vergrößerungssystems zu liegen kommt.

### AUFGABENSTELLUNG

Ausgehend von dem oben gewürdigten, der Erfindung nächstliegenden Stand der Technik ist die AUFGABE für die vorliegende Erfindung darin zu sehen, das eingangs beschriebene gattungsgemäße Sicherheitssystem, basierend auf der optischen Identifikation von hochspezifischen, räumlich erscheinenden Mikrostrukturen in einem Substrat mittels eines in das Substrat integrierten mikrooptischen Vergrößerungssystems so weiterzubilden, dass es nur ein besonders einfaches mikrooptisches Vergrößerungssystem benötigt und trotzdem eine hochspezifische Mikrostruktur mit einem hochkomplexen und damit nur extrem schwer nachahmbaren, räumlichen Erscheinungsbild aufweist. Dabei sollen die erfindungsgemäßen Mittel zur Weiterbildung einfach und kostengünstig sein, sodass ein preiswertes und damit vielfach anwendbares Sicherheitssystem entsteht. Weiterhin sollen die Mittel nur einen geringen Raum einnehmen, damit das Sicherheitssystem besonders klein und kompakt und handlich ist.

Die LÖSUNG für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Das beanspruchte Sicherheitssystem ist erfindungsgemäß dadurch gekennzeichnet, dass das mikrooptische Vergrößerungssystem eine einzige optische Achse aufweist und dass die Mikrostruktur direkt von der räumlich ausgebildeten Oberfläche zumindest eines einzelnen Mikro- oder Nanopartikels gebildet ist, der in einem transparenten Einbettungsmedium auf der optischen Achse des mikrooptischen Vergrößerungssystems eingebettet ist. Zur Identifikation der hochspezifischen Mikrostruktur benötigt der Anwender also kein spezielles Lesegerät und kein aufwändiges mikrooptisches Vergrößerungssystem mit einer Vielzahl von optischen Achsen mehr, er betrachtet lediglich in entsprechender Vergrößerung den zumindest einen im Substrat eingebetteten Mikro- oder Nanopartikel direkt durch ein einfaches mikrooptisches Vergrößerungssystem mit einer einzigen optischen Achse hindurch. Ein solches mikrooptisches Vergrößerungssystem ist vergleichbar mit einem einfachen Mikroskopaufbau mit einer einzigen optischen Achse. Auf dieser Achse können unterschiedliche optische Mikrokomponenten, wie beispielsweise eine oder mehrere optische Mikrolinsen, Blenden, Filter, Spiegel oder Prismen, angeordnet sein. Gleichfalls auf der optischen Achse ist bei der Erfindung der verwendete Mikro- oder Nanopartikel angeordnet.

Bei der Erfindung wird die Räumlichkeit des Mikrostrukturmusters nicht durch ein kompliziertes Linsenarray virtuell erzeugt, sondern die konkrete reale Dreidimensionalität von speziellen Partikeln mit hochspezifischen Mikrostrukturmustern auf ihrer Oberfläche genutzt. Insbesondere auch seitliche, die reale Räumlichkeit verifizierende Einblicke auf das Mikrostrukturmuster werden in einfacher Weise durch die Einbettung des Partikels ermöglicht, was bei der virtuellen Erzeugung des räumlichen Erscheinungsbildes nur durch die äußerst aufwändige Parallaxdarstellung möglich ist. Durch die direkte Kombination von speziellen räumlichen Mikrostrukturen auf zumindest einem einzelnen Mikro- oder Nanopartikel mit einem einfachen mikrooptischen Vergrößerungssystem werden bei der Erfindung bislang nicht öffentliche und nur mit Hilfe externer spezieller Detektionswerkzeuge lesbare Sicherheitsmerkmale zu einfachen öffentlichen Sicherheitsmerkmalen modifiziert. Der besondere Kopierschutz eines nicht-öffentlichen Sicherheitsmerkmals aufgrund seiner geringen Größe wird einfach in die Öffentlichkeit transponiert. Somit bietet die Erfindung eine Lösung für den Produktschutz an, die aus garantiert einzigartigen 3D-Mikrostrukturen besteht, die am Substrat durch ein einfaches mikrooptisches Vergrößerungsverfahren mit einer einzigen optischen Achse und einem optisch transparentem Einbettungsmedium direkt sichtbar gemacht werden. Dadurch wird der reale dreidimensionale Charakter der Mikrostrukturen deutlich herausgestellt, so dass eine Fälschung durch Mikrodruckverfahren, insbesondere durch ein drucktechnisch reproduziertes Bild, nicht möglich ist. Eine Nachahmung kann nur bei Besitz der verwendeten Mikro- oder Nanopartikel erfolgen, was aufgrund deren hoher Spezialisierung nahezu ausgeschlossen ist.

Gattungsgemäß beschäftigt sich die vorliegende Erfindung mit dem Produktschutz durch Vorsehen eines öffentlich sichtbaren Merkmals am Produkt, dessen Aussehen direkt überprüft und nicht oder nur extrem schwer nachgeahmt werden kann. Erfindungsgemäß wird das öffentlich sichtbare Merkmal durch Vorsehen eines in das Substrat integrierten mikrooptischen Vergrößerungssystems mit einer einzigen optischen Achse aus einem an sich aufgrund seiner minimalen Abmessungen nicht sichtbaren (nicht öffentlichen) Merkmal in Form des Mikro- oder Nanopartikels erzeugt.

Das mikrooptische Vergrößerungssystem ist wie ein Mikroskop aufgebaut: es besitzt eine einzelne optische Achse, auf der die mikrooptischen Komponenten angeordnet sind. Vorteilhaft handelt es sich hierbei um zumindest eine Mikrolinse. Für eine gute Vergrößerung werden aber in der Regel mehrere Mikrolinsen vorgesehen werden. In der einfachsten Ausführungsform erstreckt sich die optische Achse von der Oberseite des Substrats zu dessen Unterseite. Aus Platzgründen - insbesondere auch im Zusammenhang mit der Partikel oder Substratgröße bzw. -dicke - kann aber auch vorteilhaft vorgesehen sein, dass die optische Achse im Substrat zumindest einmal umgelenkt wird. Mittel für eine in der Regel rechtwinklige Umlenkung sind Spiegel oder Prismen.

Für den sicheren Originalitätsschutz wird bei der Erfindung minimal nur ein einziger Nano- oder Mikropartikel mit einer hochspezifischen Oberflächenausbildung benötigt, der auf der einzigen optischen Achse des mikrooptischen Vergrößerungssystems positioniert wird. Dabei bestimmt die Größe des Partikels die Dicke des Substrats. Es können aber auch ohne weiteres mehrere Partikel gleicher oder unterschiedlicher Art nebeneinander im Bereich der optischen Achse positioniert werden. Ausschlaggebend für den Nachahmungsschutz ist die absolute Individualität der verwendeten Partikel. Die eingangs im Stand der Technik genannten natürlichen und künstlichen Partikel (technische Partikel) sind grundsätzlich für einen Einsatz bei der Erfindung geeignet. Auch hier ist eine Vielfalt an seltenen Sicherheitsmerkmalen vorhanden, die mit dem mikrooptischen Vergrößerungssystem bei der Erfindung kombiniert werden können. Besonders vorteilhaft ist es, wenn der zumindest eine Mikro- oder Nanopartikel von einem anorganischen oder organischen biogenen Mikro- oder Nanopartikel gebildet wird. Dabei kann es sich bevorzugt um anorganische biomineralisierten Schalen oder um organischen Pollen oder Sporen handeln. Weiterhin können die anorganischen biomineralisierten Schalen bevorzugt von biomineralisierenden Organismen stammen. Die anorganischen biogenen Partikel haben aufgrund ihres Schalenaufbaus aus Silikat oder Kalzit grundsätzlich eine sehr hohe Stabilität. Auch organische biogene Partikel wie Pollen aus Sporopollenin oder auch künstliche Sicherheitsmerkmale können strukturell und chemisch so stabil sein, dass ihre geometrischen und optischen Eigenschaften intakt bleiben. Dabei werden Partikel solcher Größe ausgewählt, dass die charakteristischen Mikrostrukturen Strukturen mit Hilfe des mikrooptischen Vergrößerungssystems für den Betrachter auch problemlos sichtbar sind. In der Regel wird es sich um Mikropartikel handeln, Nanopartikel im oberen Nanodurchmesserbereich sind aber auch einsetzbar, insbesondere wenn die Lupenwirkung des verwendeten mikrooptischen Vergrößerungssystems erhöht wird.

Die Wahl eines mineralischen Materials für die einzusetzende Partikel gewährleistet über die o.g. Eigenschaften hinaus weitgehenden Schutz vor thermischer, chemischer und mikrobieller Zerstörung. Wegen der enormen Vielfalt an rezenten und fossilen Arten (Schätzungen gehen von »100000 Arten aus) sowie gentechnisch modifizierbaren Kulturen bieten Diatomeen und die anderen biomineralisierenden Organismen ein sehr großes Reservoir an möglichen, unverwechselbaren Sicherheitsmerkmalen. Kieselalgen sind für diese Eigenschaften seit langem in der Fachwelt bekannt. Auch Mikromineralien und nicht mineralisierte Strukturen wie z.B. Pollenkörner können ebenfalls chemisch und strukturell sehr stabil sein.

Zu den biomineralisierenden Organismengruppen zählen beispielsweise:
- Diatomeen: komplexe, hochporöse Silikatschalen unterschiedlicher Größe ca. 2-2000 µm, in großen Mengen in Lagerstätten als Diatomit oder Kieselgur in sehr unterschiedlichen Qualitäten vorhanden und abbaubar. Auch viele seltene Arten (fossil, Süßwasser).
- Radiolarien: komplexe, poröse Silikatschalen, ausschließlich im Salzwasser, vorwiegend im offenen Ozean etwa 30-mehrere 100 µm groß. Kaum Lagerstätten, aber häufig in Tiefseesedimenten, daher schwer zu beschaffen. Variation Acantharien, ähnlich, seltener, aus Strontiumsulfat.
- Foraminiferen: Komplexe, meist spiralförmig aufgerollte Kalzitstrukturen, z.T. farbig, bis mehrere mm groß, d.h. geringe Vergrößerung reicht aus.

Für die Partikel von biomineralisierenden Organismengruppen kann die Einzigartigkeit als Sicherheitspartikel beispielsweise durch folgende natürliche oder technische Maßnahmen gewährleistet werden:
Auswahl seltener Arten aus Sediment, Kulturen, oder Freilandproben Wissenschaftliche Institute und Sammlungen beherbergen eine Vielzahl an kultivierten und fossilen biomineralisierten Einzellern. Dennoch ist es auch für wissenschaftliche Zwecke oft sehr schwierig, bestimmte Arten zu beschaffen und/oder zu kultivieren. Die Auswahl wird sich auf solche recht schwierig zu beschaffende Arten konzentrieren, wie z.B. antarktische Arten, seltene fossile Arten, Arten aus isolierten Seen auf Inseln (z.B. Hawaii) oder in abgelegenen Bergseen.

Züchtung (Auslese, Mutationen, Zellfusion etc)

Durch gewisse Veränderungen der Kultivierungsbedingungen kann die arttypische Morphologie der biogenen Strukturen modifiziert werden. So wirken sich etwa bei Diatomeen geringe Silikatkonzentrationen sowie die Zugabe von Germanium stark auf das Erscheinungsbild der Schalen aus. Gezielte Mutationen (knock-out-Mutanten) können ebenfalls zu einer systematischen Veränderung der Schalenstrukturen führen. Ebenfalls können erzwungene Zellfusionen zwischen unterschiedlichen Arten i.d.R. einer Gattung zu in der Natur nicht vorhandenen Strukturen führen.

Nachbehandlung: Lösung, Beschichtung (Au, C, Pt)/technische Modifikation
- SeiO₂ *n H₂O: Ätzen mit HF, alkalische pH-Werte (ca. >8.5) führt zu einem Massenverlust der Partikel, wodurch eine Veränderung der Struktur sowie eine Verringerung der Sedimentationsgeschwindigkeit erreicht wird. CaCO₃ - Partikel können entsprechend durch sauere pH-Werte behandelt werden.
- Artfremde Substanzen/Elementkonzentrationen (Germanium, fluoreszierende Farbstoffe, Silikat oder Strontium, Magnesium) können während des Wachstums in die biomineralisierten Strukturen integriert werden.
- Beschichtung durch Besputtern oder Bedampfen, dadurch Änderung der Leitfähigkeit und der Lösungseigenschaften.

Kombination und wechselnder Einsatz
- Für jede spezielle Anwendung werden mehrere Arten in einem bestimmten, einzigartigen Verhältnis gemischt. Dabei sollte bei Hochsicherheitsanwendungen jeweils eine modifizierte Struktur eingebracht werden, da nicht auszuschließen ist, dass die Strukturen im akademischen Bereich aus Interesse elektronenmikroskopisch untersucht werden. Dies könnte umgekehrt im Rahmen einer Kooperation zur regelmäßigen Kontrolle bestimmter Produkte genutzt werden.
- Ein an den jeweiligen Bedarf angepasster, turnusmäßiger Wechsel der Zusammensetzung gewährleistet, dass eine Nachahmung durch Beschaffung und Produktion der betreffenden oder ähnlichen Organismen zeitlich nicht durchführbar ist.

Die in der Fälscherszene bestehenden, bislang eher technisch orientierten Expertisen sind nicht für die Herstellung der angeführten biogenen Produkte geeignet. Insgesamt ergibt sich bei der Erfindung eine kostengünstige und effiziente Herstellung durch minimalen Verbrauch an Material (eine einzige bzw. wenige Mikrostrukturen reichen aus) und eine hohe Reproduzierbarkeit durch Artspezifität der verwendeten Mikrostrukturen (hochspezialisierte Expertisen für die Herstellung).

Die bei der Erfindung verwendeten Mikro- und Nanopartikel sind ohne optische Hilfsmittel für das menschliche Auge nicht ausreichend detailliert wahrnehmbar. Durch die erfindungsgemäße Kombination mit einem einachsigen mikrooptischen Vergrößerungssystem werden die Mikrostrukturen jedoch für den Betrachter unmittelbar, ohne weitere Hilfsmittel und mit dreidimensionalem Charakter sichtbar. Der dreidimensionale Eindruck, der sich aus der konkreten Räumlichkeit der eingebetteten Partikel ergibt, kann durch verschiedene Maßnahmen noch verstärkt werden. Dies kann notwendig sein, da durch Kombination eines Mikrobildes (hochauflösende Drucktechnik) mit einer Linsenoptik ebenfalls ein für den Laien nicht einfach von echten räumlichen Strukturen zu unterscheidender Effekt entstehen kann. Durch folgende Maßnahmen kann eine Verifizierung der Räumlichkeit bei den Partikeln bei der Erfindung durchgeführt werden.

Zunächst kann vorteilhaft die Brennebene des mikrooptischen Vergrößerungssystems entlang seiner optischen Achse verschiebbar ausgebildet sein. Durch Verschiebung der Brennebene werden bei dem realen räumlichen Partikel unterschiedliche Zonen scharf abgebildet, wie dies auch bei herkömmlichen Mikroskopen beim sog. "Durchfokussieren" der Fall ist. Dieser Effekt kann bei der Erfindung durch verschiedene mechanische Anordnungen erzielt werden, bevorzugt beispielsweise durch ein flexibles Einbettungsmedium oder ein flexibles mikrooptisches Vergrößerungssystem. Alternativ können auch mechanische Federn oder eine Mikromechanik vorgesehen sein. Durch direkten Druck oder Druck auf eine entsprechende Vorrichtung kann dann die Brennebene als Funktion der eingesetzten Kraft verschoben werden.

Weiterhin kann vorteilhaft die Schärfentiefe des mikrooptischen Vergrößerungssystems entlang seiner optischen Achse veränderbar ausgebildet sein. Die Schärfentiefe ist abhängig von Apertur (Blende), Gegenstandsweite und Brennweite und kann nur bei echten dreidimensionalen Objekten so variiert werden, dass unterschiedlich große Schärfenbereiche im Bild sichtbar werden. Durch Variation der o.g Parameter, wie z.B. durch eine Mikroblende, kann dieser Effekt sichtbar gemacht werden. Ist wahlweise beispielsweise ein vollständiges Mikro-Exoskelett oder ein Schnitt durch dasselbe klar sichtbar, handelt es sich zweifelsfrei um eine räumliche Struktur und keine Abbildung derselben.

Zur optimalen Betrachtung des eingebetteten Partikels kann in der Regel bereits schon das Tageslicht genutzt werden. Dazu ist es vorteilhaft, wenn das transparente Einbettungsmedium über die gesamte Höhe des Substrats ausgebildet ist. Zur Betrachtung des Partikels kann das Substrat dann einfach in das Licht gehalten werden. Alternativ oder zusätzlich kann aber auch vorteilhaft eine Beleuchtungseinheit mit Energieversorgung und Lichtquelle zur Beleuchtung des Mikro- oder Nanopartikels vorgesehen sein, wobei die Lichtquelle Strahlung im sichtbaren oder nicht-sichtbaren Bereich emittiert. LED mit geringem Energiebedarf eigenen sich besonders als Lichtquellen. Eine solche Beleuchtungseinheit kann beispielsweise gleichzeitig beim Drücken zur Veränderung der Brennebene oder Schärfentiefe aktiviert werden. Das mikrooptische Vergrößerungssystem bei der Erfindung wirkt auf kleinstem Raum, um eine Integration in das zu schützende Produkt zu ermöglichen. Die Beleuchtungseinheit wird inklusive Energieversorgung und Elektronik ebenfalls mit in das Substrat eingebettet. Wichtig für die integrierte Lichtquelle ist die möglichst gute Ausleuchtung des integrierten Partikels. Dieser kann direkt aber auch indirekt angeleuchtet werden. Zur indirekten Beleuchtung des Mikro- oder Nanopartikels ist die Verwendung eines Spiegels vorteilhaft. Dieser kann als innenverspiegelter Ellipsoid ausgebildet sein, in dessen Brennpunktbereichen die Lichtquelle und der Mikro- oder Nanopartikel angeordnet sind. Weitere Details sind dem speziellen Beschreibungsteil zu entnehmen.

Im Regelfall unterscheiden sich der Brechungsindex des Mikro- oder Nanopartikels und des optisch transparenten Einbettungsmediums so deutlich, dass das Erscheinungsbild des Partikels nach Einbettung in das Einbettungsmedium, bei dem es sich beispielsweise um einen Kunststoff oder Kunstharz handeln kann, erhalten bleibt. Der Partikel ist also unter Beleuchtung von sichtbarem Licht deutlich erkennbar. Alternativ können aber auch der Mikro- oder Nanopartikel und das Einbettungsmedium denselben Brechungsindex aufweisen, wobei der Mikro- oder Nanopartikel mit einem Fluoreszenzfarbstoff markiert ist, der unter künstlicher Beleuchtung sichtbar wird. Eine Lichtquelle mit einer Emission im nicht-sichtbaren Spektralbereich, z.B. im ultra-violetten Bereich, kann hierbei eingesetzt werden. Die Kombination von speziellen Farbstoffen und ähnlichen Brechungsindizes mit einer speziellen Beleuchtung bei der Erfindung erlaubt die Sichtbarmachung von ansonsten im Tageslicht nichtöffentlichen Fluoreszenzstrukturen als zusätzliches, nur erschwert nachahmbares Identifikationsmerkmal. Eine weitere Erschwerung der Nachahmung ergibt sich durch beliebige Kombinationen der zuvor genannten Aspekte (biologische und technische Modifikation, Kombination sowie wechselnder Einsatz der Objekte und mikrooptischen Vergrößerungssysteme).

Der eigentliche Originalitätsschutz bei der Erfindung liegt in der Einzigartig der verwendeten Mikro- oder Nanopartikel. Hier kann der Betrachter in der Regel bereits entscheiden, ob es sich um einen originalen Partikel oder um eine Nachahmung handelt. Ein weiterer Schutz kann dadurch erreicht werden, dass ein Abbild des eingebetteten Partikels hinterlegt wird, beispielsweise in eine Online-Datenbank. Der Betrachter hat einen kodierten Zugriff und gibt beispielsweise eine auf dem Substrat vermerkte Partikelnummer ein. Online erscheint dann ein Foto des verwendeten Partikels und der Betrachter kann problemlos vergleichen. Zusätzlich oder alternativ kann auch vorgesehen sein, dass ein Druckbild des Erscheinungsbildes des eingebetteten Mikro- oder Nanopartikels auf der Oberseite des Substrats vorgesehen ist. Der Nachahmungsschutz umfasst dann den speziellen Partikel an sich und noch zusätzlich sein komplexes Abbild. Eine Identifizierung des Partikels wird durch Vorsehen des Abbildes erleichtert. Gleichzeitig ergibt sich ein zusätzlicher Aspekt der Ästhetik durch das Abbild. Diese kann beispielsweise dem Auftrittsbild einer Firma angepasst werden. Bei dem Substrat kann es sich schließlich um jede Art von beweglichem Träger, beispielsweise um eine Kreditkarte oder um ein Etikett aus Kunststoff, handeln.

### AUSFÜHRUNGSBEISPIELE

Ausbildungsformen des Sicherheitssystems nach der Erfindung, basierend auf der optischen Identifikation von hochspezifischen, räumlich erscheinenden Mikrostrukturen in einem Substrat mittels eines in das Substrat integrierten mikrooptisches Vergrößerungssystems, werden nachfolgend anhand der schematischen Figuren näher erläutert. Dabei zeigt:
- **FIGUR 1A**: eine Draufsicht des prinzipiellen Aufbau des Sicherheits- systems,
- **FIGUR 1B**: einen schematischen Querschnitt durch die Mitte des Sicherheitssystems und
- **FIGUR 2**: eine konstruierte Fotoansicht des Sicherheitssystem in der Ausbildung einer Kredtikarte.

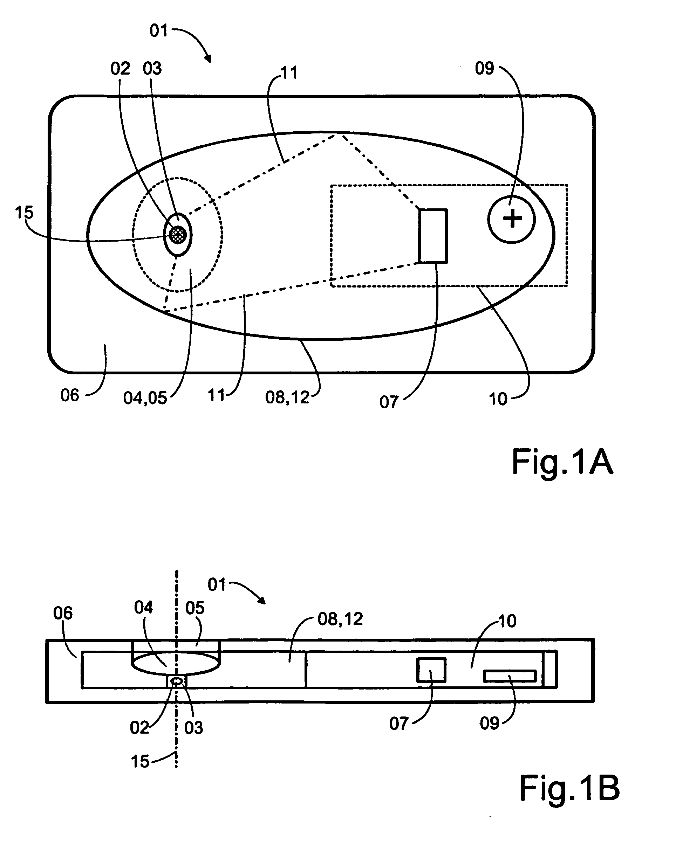

Die FIGUR **1A** zeigt in der Draufsicht den prinzipiellen Aufbau eines Sicherheitssystems **01** nach der Erfindung, das auf der optischen Identifikation von hochspezifischen, räumlich erscheinenden Mikrostrukturen beruht. Die FIGUR **1B** zeigt einen schematischen Querschnitt durch die Mitte des Sicherheitssystems **01.**

Die Mikrostruktur wird direkt von der räumlich ausgebildeten Oberfläche zumindest eines einzelnen Mikro- oder Nanopartikels **02** gebildet, der in einem transparenten Einbettungsmedium **03** (beispielsweise ein Kunststoff oder ein Kunstharz) direkt unterhalb einer einzelnen sphärischen Mikrolinse **04** eines mikrooptisches Vergrößerungssystems **05** eingebettet ist. Das mikrooptische. Vergrößerungssystem **05** weist nur eine einzige optische Achse **15** (in der Draufsicht als Punkt dargestellt, siehe auch **FIGUR 1B****)** auf, auf der die Mikrolinse **04** (in den **FIGUREN 1A** und **B** wird für eine übersichtliche Darstellung jeweils nur ein einzelne Mikrolinse **04** gezeigt, in der praktischen Umsetzung werden aber mehrere Mikrolinsen **04** auf der optischen Achse **15** angeordnet) und der Mikro- oder Nanopartikel **02** positioniert sind. Alle genannten Elemente sind in ein gemeinsames Substrat **06** integriert. Weiterhin sind in das Substrat **06** eine Lichtquelle **07,** ein Spiegel **08** und eine Energieversorgung **09** für die Lichtquelle **07** sowie eine Ansteuerelektronik **10** integriert. Im gezeigten Ausführungsbeispiel erstreckt sich das Einbettungsmedium **03** nicht über die gesamte Höhe des Substrats **06,** sodass natürlicher Lichteinfall nur von oben durch die Mikrolinse **04** erfolgen kann.

Im gewählten Ausführungsbeispiel hat das Substrat **06** die Flächenabmessungen einer Kreditkarte (53 mm x 85 mm). Eine weitere Verkleinerung des Gesamtaufbaus des Sicherheitssystems **01** um zumindest einen Faktor **10** (gegenüber der Kreditkarte) ist technisch möglich und verändert den Charakter der Erfindung nicht. Die Lichtquelle **07** wird auf eine Vorgabe von Außen, beispielsweise über die Auslösung eines Schaltpulses oder die Betätigung eines Drucksensors) durch die Ansteuerelektronik **10** aktiviert und erzeugt entweder eine Beleuchtung des Mikro- oder Nanopartikels **02** mit weißem oder farbigem Licht oder mit nicht-sichtbarem Licht zur Anregung von Fluoreszenz, z.B. im nahen UV Spektralbereich. Die Lichtquelle **07** leuchtet den Mikro- oder Nanopartikel **02** zwar auch direkt an, für eine gleichmäßige homogene indirekte Ausleuchtung des Mikro- oder Nanopartikels **02** von allen Seiten (siehe beispielhafte Lichtstrahlen **11**) ist aber im gewählten Ausführungsbeispiel der Spiegel **08** vorgesehen, der als innenverspiegelter Ellipsoid **12** ausgebildet ist. Die Lichtquelle **07** und der Mikro- oder Nanopartikel **02** liegen ungefähr in den Brennpunktbereichen des elliptischen Spiegels **08.** Alternativ sind in das Einbettungsmedium **03** eingelassene Spiegel- und Linsen-Aufbauten realisierbar.

Die Vergrößerung des Mikro- oder Nanopartikels **02** wird durch das mikrooptische Vergrößerungssystem **05** realisiert, das aus einer Reihe von verschiedenen mikrooptischer Komponenten, die auf der einzigen optischen Achse **15** angeordnet sind, bestehen kann. Im Ausführungsbeispiel ist der einfachste Aufbau mit einer einzelnen sphärischen Mikrolinse **04** dargestellt. Zusätzlich können zur Parameteränderung (Fokussierung, Schärfentiefe) des mikrooptischen Vergrößerungssystems **05** für eine Verifizierung der Räumlichkeit des gewählten Mikro- oder Nanopartikels **02** und damit dessen Echtheit noch Blenden und Verstelleinrichtungen vorgesehen sein. Zur Strahlumlenkung bzw. zur Umlenkung der optischen Achse **15** können entsprechende Spiegel oder Prismen vorgesehen sein. Auch kann das Sicherheitssystem **01** mit teils flexiblem Einbettungsmedium **03** oder eines flexiblen mikrooptischen Vergrößerungssystems **05** realisiert werden. Unter Krafteinwirkung auf die flexiblen Elemente erfolgt dann eine Veränderung der genannten Parameter und eine Verdeutlichung der realen Räumlichkeit des verwendeten Mikro- oder Nanopartikels **02.**

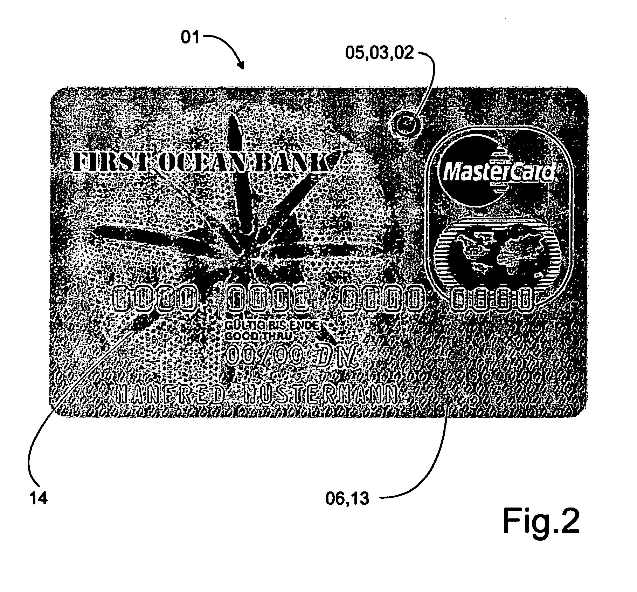

In der FIGUR **2** ist die Ausführung des Sicherheitssystem **01** nach der Erfindung als Kreditkarte **13** dargestellt. Etiketten mit ähnlichem Format sind ebenfalls ausführbar. Auf der Kreditkarte **13** ist die Ansicht des mikrooptisches Vergrößerungssystems **05** zu erkennen, auf dessen optischer Achse **15** der Mikro- oder Nanopartikel **02** angeordnet ist. Durch die implizierte Vergrößerung ist die für das menschliche Auge nicht direkt erkennbare oberflächliche Mikrostruktur des Mikro- oder Nanopartikels **02** damit zu einem öffentlichen Merkmal geworden. Als Nebeneffekte der öffentlichen Sichtbarkeit sind weitere Eigenschaften möglich, z.B. können Mikrostrukturen gewählt werden, deren Erscheinungsbild dem Logo des Kunden ähnelt bzw. zum Corporate Design passt. Dies wird noch unterstrichen, wenn zur Vereinfachung der Verifizierung der Mikrostruktur des Mikro- oder Nanopartikels **02** ein Druckbild **14** davon auf der Kreditkarte **13** dargestellt ist. Im gewählten Ausführungsbeispiel ist ein Mikropartikel **02** der Gattung *Asteromphalus* ausgewählt worden.

### Bezugszeichenliste

- **01**: Sicherheitssystem
- **02**: Mikro- oder Nanopartikel
- **03**: Einbettungsmedium
- **04**: Mikrolinse
- **05**: mikrooptisches Vergrößerungssystem
- **06**: Substrat
- **07**: Lichtquelle
- **08**: Spiegel
- **09**: Energieversorgung
- **10**: Ansteuerelektronik
- **11**: Lichtstrahl
- **12**: innenverspiegelter Ellipsoid
- **13**: Kreditkarte
- **14**: Druckbild
- **15**: optische Achse

## Patentansprüche

1. Sicherheitssystem, basierend auf der optischen Identifikation von hochspezifischen, räumlich erscheinenden Mikrostrukturen, wobei das Sicherheitssystem ein Substrat (06) umfasst, in das mindestens eine räumlich ausgebildete Mikrostruktur (02) sowie ein mikrooptisches Vergrößerungssystem (5) integriert sind,
**dadurch gekennzeichnet, dass**
das mikrooptische Vergrößerungssystem (05) eine einzige optische Achse (15) aufweist und dass die Mikrostruktur direkt von der räumlich ausgebildeten Oberfläche mindestens eines Mikro- oder Nanopartikels (02) gebildet ist, der in einem transparenten Einbettungsmedium (03) auf der optischen Achse (15) des mikrooptischen Vergrößerungssystems (05) eingebettet ist.

2. Sicherheitssystem nach Anspruch 1,
**dadurch gekennzeichnet, dass**
das mikrooptische Vergrößerungssystem (05) auf seiner optischen Achse (15) zumindest eine Mikrolinse (04) aufweist.

3. Sicherheitssystem nach Anspruch 1 oder 2,
**dadurch gekennzeichnet, dass**
die optische Achse (15) im Substrat (06) zumindest einmal umgelenkt ist.

4. Sicherheitssystem nach einem der Ansprüche 1 bis 3,
**dadurch gekennzeichnet, dass**
der Mikro- oder Nanopartikel (02) von einem anorganischen oder organischen biogenen Mikro- oder Nanopartikel (02) gebildet ist.

5. Sicherheitssystem nach Anspruch 4,
**dadurch gekennzeichnet, dass**
der biogene Mikro- oder Nanopartikel (02) von einer anorganischen biomineralisierten Schale oder einer organischen Polle oder Spore gebildet ist.

6. Sicherheitssystem nach Anspruch 5,
**dadurch gekennzeichnet, dass**
die anorganische biomineralisierte Schale von biomineralisierenden Organismen stammt.

7. Sicherheitssystem nach einem der Ansprüche 4 bis 6,
**dadurch gekennzeichnet, dass**
der biogene Mikro- oder Nanopartikel (02) in seinem dreidimensionalen Erscheinungsbild technisch modifiziert ist.

8. Sicherheitssystem nach einem der Ansprüche 1 bis 7,
**dadurch gekennzeichnet, dass**
die Brennebene des mikrooptischen Vergrößerungssystems (05) entlang der optischen Achse (15) verschiebbar ausgebildet ist.

9. Sicherheitssystem nach Anspruch 8,
**dadurch gekennzeichnet, dass**
zur Verschiebung der Brennebene ein flexibles Einbettungsmedium (03), eine mechanische Feder oder eine Mikromechanik vorgesehen ist.

10. Sicherheitssystem nach einem der Ansprüche 1 bis 9,
**dadurch gekennzeichnet, dass**
die Schärfentiefe des mikrooptischen Vergrößerungssystems (05) entlang der optischen Achse (15) veränderbar ausgebildet ist.

11. Sicherheitssystem nach Anspruch 10,
**dadurch gekennzeichnet, dass**
zur Veränderung der Schärfentiefe ein flexibles mikrooptisches Vergrößerungssystem (05) oder eine Blende vorgesehen ist.

12. Sicherheitssystem nach einem der Ansprüche 1 bis 11,
**dadurch gekennzeichnet, dass**
das transparente Einbettungsmedium (03) über die gesamte Höhe des Substrats (06) ausgebildet ist.

13. Sicherheitssystem nach einem der Ansprüche 1 bis 12,
**dadurch gekennzeichnet, dass**
eine Beleuchtungseinheit mit Energieversorgung (09) und Lichtquelle (07) zur Beleuchtung des Mikro- oder Nanopartikels (02) vorgesehen ist, wobei die Lichtquelle (07) Strahlung im sichtbaren oder nicht-sichtbaren Bereich emittiert.

14. Sicherheitssystem nach Anspruch 13,
**dadurch gekennzeichnet, dass**
die Beleuchtungseinheit einen Spiegel (08) zur indirekten Beleuchtung des Mikro- oder Nanopartikels (02) aufweist.

15. Sicherheitssystem nach Anspruch 14,
**dadurch gekennzeichnet, dass**
der Spiegel (08) als innenverspiegelter Ellipsoid (12) ausgebildet ist, in dessen Brennpunktbereichen die Lichtquelle (07) und der Mikro- oder Nanopartikel (02) angeordnet sind.

16. Sicherheitssystem nach einem der Ansprüche 13 bis 15,
**dadurch gekennzeichnet, dass**
der Mikro- oder Nanopartikel (02) und das Einbettungsmedium (03) denselben Brechungsindex aufweisen, wobei der Mikro- oder Nanopartikel (02) mit einem Fluoreszenzfarbstoff markiert ist, der unter künstlicher Beleuchtung sichtbar wird.

17. Sicherheitssystem nach einem der Ansprüche 1 bis 16,
**dadurch gekennzeichnet, dass**
ein Druckbild (14) des Erscheinungsbildes der eingebetteten Mikro- oder Nanopartikels (02) auf der Oberseite des Substrats (03) vorgesehen ist.

18. Sicherheitssystem nach einem der Ansprüche 1 bis 17,
**dadurch gekennzeichnet, dass**
das Substrat (06) von einer Kreditkarte (13) oder einem Etikett aus Kunststoff gebildet wird.

## Claims

1. Security system, based on the optical identification of highly-specific, spatially arising microstructures, wherein the security system comprises a substrate (06), into which at least one spatially constructed microstructure (02) and also a magnifying microoptical system (05) are integrated,
**characterised in that**
the magnifying microoptical system (05) has a single optical axis (15) and **in that** the microstructure is formed directly by the spatially constructed surface of at least one micro- or nanoparticle (02) which is embedded in a transparent embedding medium (03) on the optical axis (15) of the magnifying microoptical system (05).

2. Security system according to Claim 1,
**characterised in that**
the magnifying microoptical system (05) has at least one microlens (04) on its optical axis (15).

3. Security system according to Claim 1 or 2,
**characterised in that**
the optical axis (15) in the substrate (06) is diverted at least once.

4. Security system according to any one of Claims 1 to 3,
**characterised in that**
the micro- or nanoparticle (02) is formed by an inorganic or organic biogenic micro- or nanoparticle (02).

5. Security system according to Claim 4,
**characterised in that**
the biogenic micro- or nanoparticle (02) is formed by an inorganic biomineralised shell or an organic pollen or spore.

6. Security system according to Claim 5,
**characterised in that**
the inorganic biomineralised shell originates from biomineralised organisms.

7. Security system according to any one of Claims 4 to 6,
**characterised in that**
the biogenic micro- or nanoparticle (02) is technically modified in term of its three-dimensional appearance.

8. Security system according to any one of Claims 1 to 7,
**characterised in that**
the focal plane of the magnifying microoptical system (05) along the optical axis (15) is formed such that it can be displaced.

9. Security system according to Claim 8,
**characterised in that**
a flexible embedding medium (03), a mechanical spring or micromechanics are provided for displacing the focal plane.

10. Security system according to any one of Claims 1 to 9,
**characterised in that**
the depth of field of the magnifying microoptical system (05) along the optical axis (15) is formed such that it can be changed.

11. Security system according to Claim 10,
**characterised in that**
a flexible magnifying microoptical system (05) or a screen is provided for changing the depth of field.

12. Security system according to any one of Claims 1 to 11,
**characterised in that**
the transparent embedding medium (03) is constructed over the entire height of the substrate (06).

13. Security system according to any one of Claims 1 to 12,
**characterised in that**
an illuminating unit with power supply (09) and light source (07) is provided for illuminating the micro- or nanoparticle (02), wherein the light source (07) emits radiation in the visible or non-visible range.

14. Security system according to Claim 13,
**characterised in that**
the illuminating unit has a mirror (08) for the indirect illumination of the micro- or nanoparticle (02).

15. Security system according to Claim 14,
**characterised in that**
the mirror (08) is constructed as internally mirrored ellipsoid (12), in the focal point regions of which the light source (07) and the micro- or nanoparticle (02) are arranged.

16. Security system according to any one of Claims 13 to 15,
**characterised in that**
the micro- or nanoparticle (02) and the embedding medium (03) have the same refractive index, wherein the micro- or nanoparticle (02) is marked with a fluorescent dye which becomes visible under artificial illumination.

17. Security system according to any one of Claims 1 to 16,
**characterised in that**
a printed image (14) of the appearance of the embedded micro- or nanoparticle (02) on the surface of the substrate (03) is provided.

18. Security system according to any one of Claims 1 to 17,
**characterised in that**
the substrate (06) is formed by a credit card (13) or a label made from plastic.

## Revendications

1. Système de sécurité, basé sur une identification optique de microstructures hautement spécifiques, ayant un aspect tridimensionnel, dans lequel le système de sécurité comprend un substrat (06) dans lequel sont intégrés au moins une microstructure (02) réalisée en trois dimensions ainsi qu'un système micro-optique de grossissement (05),
**caractérisé en ce que**
le système micro-optique de grossissement (05) présent un seul axe optique (15), et **en ce que** la microstructure est formée directement par la surface réalisée en trois dimensions d'au moins une microparticule ou nanoparticule (02) incorporée dans un support d'incorporation transparent (03) sur l'axe optique (15) du système micro-optique de grossissement (05).

2. Système de sécurité selon la revendication 1,
**caractérisé en ce que**
le système micro-optique de grossissement (05) présente sur son axe optique (15) au moins une microlentille (04).

3. Système de sécurité selon la revendication 1 ou 2,
**caractérisé en ce que**
l'axe optique (15) est dévié au moins une fois dans le substrat (06).

4. Système de sécurité selon l'une quelconque des revendications 1 à 3,
**caractérisé en ce que**
la microparticule ou nanoparticule (02) est formée par une microparticule ou nanoparticule (02) anorganique ou organique.

5. Système de sécurité selon la revendication 4,
**caractérisé en ce que**
la microparticule ou nanoparticule biogène (02) est formée par une pellicule biominéralisée anorganique ou un pollen ou une spore.

6. Système de sécurité selon la revendication 5,
**caractérisé en ce que**
la pellicule biominéralisée anorganique provient d'organismes biominéralisants.

7. Système de sécurité selon l'une quelconque des revendications 4 à 6,
**caractérisé en ce que**
la microparticule ou nanoparticule biogène (02) est modifiée techniquement au niveau de son aspect tridimensionnel.

8. Système de sécurité selon l'une quelconque des revendications 1 à 7,
**caractérisé en ce que**
le plan focal du système micro-optique de grossissement (05) est réalisé de façon mobile suivant l'axe optique (15).

9. Système de sécurité selon la revendication 8,
**caractérisé en ce qu'**
un support d'incorporation flexible (03), un ressort mécanique ou un dispositif micromécanique est prévu pour le déplacement du plan focal.

10. Système de sécurité selon l'une quelconque des revendications 1 à 9,
**caractérisé en ce que**
la profondeur de champ du système micro-optique de grossissement (05) est réalisée de façon variable suivant l'axe optique (15).

11. Système de sécurité selon la revendication 10,
**caractérisé en ce qu'**
un système micro-optique de grossissement flexible (05) ou un filtre est prévu pour faire varier la profondeur de champ.

12. Système de sécurité selon l'une quelconque des revendications 1 à 11,
**caractérisé en ce que**
le support d'incorporation transparent (03) est réalisé sur toute la hauteur du substrat (06).

13. Système de sécurité selon l'une quelconque des revendications 1 à 12,
**caractérisé en ce qu'**
une unité d'éclairage avec une alimentation en énergie (09) et une source de lumière (07) pour éclairer la microparticule ou nanoparticule (02) est prévue, la source de lumière (07) émettant un rayonnement dans le domaine visible ou non visible.

14. Système de sécurité selon la revendication 13,
**caractérisé en ce que**
l'unité d'éclairage présente un miroir (08) pour l'éclairage indirect de la microparticule ou nanoparticule (02).

15. Système de sécurité selon la revendication 14,
**caractérisé en ce que**
le miroir (08) est réalisé comme un ellipsoïde (12) métallisé à l'intérieur, dans les régions focales duquel sont disposées la source de lumière (07) et la microparticule ou nanoparticule (02).

16. Système de sécurité selon l'une quelconque des revendications 13 à 15,
**caractérisé en ce que**
la microparticule ou nanoparticule (02) et le support d'incorporation (03) présentent le même indice de réfraction, dans lequel la microparticule ou nanoparticule (02) est marquée par un colorant fluorescent devenant visible sous un éclairage artificiel.

17. Système de sécurité selon l'une quelconque des revendications 1 à 16,
**caractérisé en ce qu'**
une image imprimée (14) de l'aspect de la microparticule ou nanoparticule (02) incorporée est prévue sur la face supérieure du substrat (03).

18. Système de sécurité selon l'une quelconque des revendications 1 à 17,
**caractérisé en ce que**
le substrat (06) est formé par une carte de crédit (13) ou une étiquette en matière plastique.
